# EUROPEAN PATENT SPECIFICATION

(11) **EP 4 075 902 B1**
(45) Date of publication and mention of the grant of the patent: **18.09.2024**
(21) Application number: 19958390.7
(22) Date of filing: 31.12.2019
(51) Int. Cl.: H04L 5/00, H04L 47/70, H04W 28/02, H04W 24/10, H04W 24/08, H04W 24/02, H04W 16/22, H04W 64/00, H04L 47/83

(54) **SOUNDING REFERENCE SIGNAL (SRS) PERIOD CONFIGURATION METHOD AND APPARATUS**
VERFAHREN UND VORRICHTUNG ZUR BESTIMMUNG DER PERIODENDAUER EINES AKUSTISCHEN REFERENZSIGNALS (SRS)
PROCÉDÉ ET APPAREIL DE CONFIGURATION DE PÉRIODE DE SIGNAL DE RÉFÉRENCE DE SONDAGE (SRS)

(43) Date of publication of application: 19.10.2022
(73) Proprietor: Huawei Technologies Co., Ltd., Shenzhen, Guangdong 518129 (CN)
(72) Inventor: LI, Jing, Shenzhen, Guangdong 518129 (CN); WU, Lihua, Shenzhen, Guangdong 518129 (CN)
(74) Representative: Maiwald GmbH
(86) International application number: PCT/CN2019/130938
(87) International publication number: WO 2021/134698

(56) References cited:
- WO-A1-2014/038755
- WO-A1-2017/107054
- WO-A1-2018/053755
- CN-A- 101 714 897
- CN-A- 103 024 915
- CN-A- 103 024 915
- US-A1- 2012 224 556
- US-A1- 2019 109 689

## Description

### TECHNICAL FIELD

This application relates to the field of wireless communication technologies, and in particular, to a method for configuring a sounding reference signal SRS period, and an apparatus.

### BACKGROUND

A sounding reference signal (sounding reference signal, SRS) is an uplink reference signal sent by a terminal device to a network device, and is used to estimate performance of an uplink channel and provide a reference for uplink resource scheduling and downlink beamforming.

In a conventional technology, the SRS may be periodically sent, and configuration of an SRS period is closely associated with a quantity of users in a cell. When the quantity of users in the cell is small, a configured short SRS period can ensure the downlink beamforming (BF) performance of the users. When the quantity of users in the cell is large, a configured long SRS period can ensure the basic SRS measurement performance of the users. This prevents call drop caused by failure to allocate SRS resources to a part of users. However, to adjust the SRS period, an SRS resource needs to be reconfigured for a user by using radio resource control (radio resource control, RRC) signaling. If the SRS period is adjusted in real time based on the quantity of users in the cell, excessively frequent SRS period adjustment is caused in the following scenarios: the quantity of users fluctuates greatly within a short time, or the quantity of users is not counted promptly or accurately. As a result, large signaling overheads are required.

US 2019/109689 A1 describes methods for transmitting and receiving reference signals.

CN 103 024 915 B describes a method for realizing self-adaptation of uplink sensing reference signal period

### SUMMARY

Embodiments of this application provide a method for configuring a sounding reference signal SRS period, and an apparatus, to effectively configure the SRS period and reduce signaling overheads.

The present invention is defined by the subject-matter of the independent claims. Additional features of the invention are presented in the dependent claims.

According to a first aspect, an embodiment of this application provides a method for configuring a sounding reference signal SRS period. The method may be performed by a communication apparatus, for example, a network device or a chip in a network device. The method includes: The communication apparatus obtains a quantity of radio resource control RRC connected users in at least one neighboring cell of a first cell within a first time period, predicts a quantity of RRC connected users in the first cell within a second time period based on the quantity of RRC connected users in the at least one neighboring cell of the first cell within the first time period, and configures, based on the predicted quantity of RRC connected users in the first cell within the second time period, an SRS period for a terminal device that accesses the first cell within the second time period.

According to the foregoing design, before the second time period arrives, the communication apparatus may predict the quantity of RRC connected users in the first cell within the second time period based on the quantity of RRC connected users in the at least one neighboring cell of the first cell within the first time period, to configure the SRS period for the terminal device that accesses the first cell within the second time period. It can be learned that the communication apparatus may preconfigure, for the first cell, an SRS period that is available within the second time period, and does not need to reconfigure the SRS period within the second time period. Therefore, excessively frequent SRS period adjustment can be avoided, and signaling overheads for configuring the SRS period can be effectively reduced. In addition, the configured SRS period can meet an access situation of the first cell within the second time period.

In a possible design of the first aspect, for each of the at least one neighboring cell of the first cell, a quantity of RRC connected users in the neighboring cell within the first time period includes a quantity of RRC connected users in the neighboring cell at various moments of the first time period. In this way, the predicted quantity of RRC connected users in the first cell within the second time period may be a sum of quantities of RRC connected users in the at least one neighboring cell of the first cell at a first moment of the first time period. The sum of the quantities of RRC connected users in the at least one neighboring cell at the first moment is greater than or equal to a sum of quantities of RRC connected users in the at least one neighboring cell at another moment of the first time period. Alternatively, it may also be understood that the predicted quantity of RRC connected users in the first cell within the second time period is a maximum value that can be reached by the sum of the quantities of RRC connected users in the at least one neighboring cell of the first cell within the first time period.

According to the foregoing design, a quantity of users in the first cell within the second time period may be predicted based on the maximum value of the sum of the quantities of RRC connected users in the at least one neighboring cell of the first cell within the first time period before the second time period. Therefore, a maximum quantity of RRC connected users who may access the first cell within the second time period may be obtained, the SRS period within the second time period is configured based on the maximum quantity of RRC connected users. This can effectively avoid a problem that when a large quantity of terminal devices access the first cell in batches within the second time period, some terminal devices experience call drops because no SRS resources are allocated to the terminal devices.

In a possible design of the first aspect, the communication apparatus may configure, based on the predicted quantity of RRC connected users in the first cell within the second time period and a mapping relationship between the quantity of RRC connected users and the SRS period, the SRS period for the terminal device that accesses the first cell within the second time period. The mapping relationship between the quantity of RRC connected users and the SRS period may be predefined, or may be preconfigured on the communication apparatus. In addition, the mapping relationship may be adjusted by the communication apparatus in a timely manner based on a requirement.

In a possible design of the first aspect, the communication apparatus may count a quantity of RRC connected users in the first cell in real time, and send (for example, may periodically send) the counted quantity of RRC connected users in the first cell to the at least one neighboring cell of the first cell. The quantity of RRC connected users in the first cell counted in real time is used to configure an SRS period for each neighboring cell. In this way, the SRS period can also be configured for each neighboring cell of the first cell in a manner the same as or similar to that of the first cell, and this can effectively reduce signaling overheads for configuring the SRS period.

According to a second aspect, an embodiment of this application provides another method for configuring a sounding reference signal SRS period. The method may be performed by a communication apparatus, for example, a network device or a chip in a network device. The method includes: The communication apparatus obtains historical statistical data of a quantity of RRC connected users in a first cell within a variation period. The variation period includes a plurality of time periods, and the historical statistical data includes a quantity of RRC connected users in the first cell in each time period of the variation period. The communication apparatus predicts a quantity of RRC connected users in the first cell within a third time period based on a quantity of RRC connected users in the first cell in a time period that is at a same location as the third time period in the variation period. The communication apparatus configures, based on the predicted quantity of RRC connected users in the first cell within the third time period, an SRS period for a terminal device that accesses the first cell within the third time period.

According to the foregoing design, before the third time period arrives, the communication apparatus may predict the quantity of RRC connected users in the first cell within the third time period based on a historical variation rule of the quantity of RRC connected users in the first cell, to configure the SRS period for the terminal device that accesses the first cell within the third time period. In this way, the communication apparatus may preconfigure, for the first cell, an SRS period that is available within the third time period, and does not need to reconfigure the SRS period within the third time period. Therefore, excessively frequent SRS period adjustment can be avoided, and signaling overheads for configuring the SRS period can be effectively reduced. In addition, the configured SRS period can meet an access situation of the first cell within the third time period.

In a possible design of the second aspect, that the communication apparatus obtains historical statistical data of a quantity of RRC connected users in a first cell within a variation period may include: The communication apparatus obtains a quantity of RRC connected users in the first cell within a past set duration range, and determines the variation period based on the quantity of RRC connected users in the first cell within the past set duration range. The set duration range includes a plurality of variation periods. For each time period in the variation period, the communication apparatus determines a quantity of RRC connected users in the first cell in the time period in the historical statistical data based on quantities of RRC connected users in the first cell in the time period in the plurality of variation periods included within the set duration range. In this way, the historical statistical data of the quantity of RRC connected users in the first cell within the variation period can reflect a variation rule of the quantity of RRC connected users in the first cell, to provide guidance for predicting the quantity of RRC connected users in the first cell within the third time period.

In a possible design of the second aspect, the quantity of RRC connected users in the first cell in the time period in the historical statistical data may be an average value of the quantities of RRC connected users in the first cell in the time period in the plurality of variation periods included within the set duration range. Alternatively, the quantity of RRC connected users in the first cell in the time period in the historical statistical data is a value obtained after data filtering is performed on the quantities of RRC connected users in the first cell in the time period in the plurality of variation periods included within the set duration range. Alternatively, the communication apparatus may further determine the quantity of RRC connected users in the first cell in the time period in the historical statistical data based on a cumulative distribution curve of the quantities of RRC connected users in the first cell in the time period in the plurality of variation periods included within the set duration range.

According to the foregoing design, the communication apparatus may use a plurality of possible manners to determine, in the historical statistical data, a specific value of the quantity of RRC connected users in the first cell corresponding to each time period of the variation period, so that flexibility of the method for configuring the SRS period can be effectively improved.

According to a third aspect, an embodiment of this application provides a communication apparatus. The apparatus can implement functions of the communication apparatus in the first aspect or any one of the possible designs of the first aspect, or functions of the communication apparatus in the second aspect or any one of the possible designs of the second aspect. The communication apparatus may be a network device, for example, a base station, or may be an apparatus, for example, a chip, included in the network device. The functions of the communication apparatus may be implemented by hardware, or may be implemented by hardware by executing corresponding software. The hardware or the software includes one or more modules corresponding to the functions.

In a possible design, a structure of the apparatus includes a processing module and a transceiver module. The processing module is configured to support the apparatus to perform corresponding functions of the communication apparatus in the first aspect or any design of the first aspect, or perform corresponding functions of the communication apparatus in the second aspect or any design of the second aspect. The transceiver module is configured to support communication between the apparatus and another communication apparatus. For example, when the apparatus is a network device, a quantity of RRC connected users in at least one neighboring cell of a first cell within a first time period may be received from the another network device. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute computer program instructions stored in the memory, so that the apparatus performs the method in the first aspect or any one of the possible designs of the first aspect or the method in the second aspect or any one of the possible designs of the second aspect. Optionally, the apparatus further includes a communication interface, and the processor is coupled to the communication interface. When the apparatus is a terminal device, the communication interface may be a transceiver or an input/output interface. When the apparatus is a chip included in a terminal device, the communication interface may be an input/output interface of the chip. Optionally, the transceiver may be a transceiver circuit, and the input/output interface may be an input/output circuit.

Preferably, a chip system, including a processor, is provided. The processor is coupled to a memory, the memory is configured to store a program or instructions, and when the program or the instructions is/are executed by the processor, the chip system is enabled to implement the method in the first aspect or any one of the possible designs of the first aspect, or implement the method in the second aspect or any one of the possible designs of the second aspect.

Optionally, the chip system further includes an interface circuit, and the interface circuit is configured to receive code instructions and send the code instructions to the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software codes stored in the memory.

Optionally, there may also be one or more memories in the chip system. The memory may be integrated with the processor, or may be disposed separately from the processor. This is not limited in this application. For example, the memory may be a non-transitory processor such as a read-only memory (ROM). The memory and the processor may be integrated into a same chip, or may be separately disposed on different chips. A type of the memory and a manner of disposing the memory and the processor are not specifically limited in this application.

Preferably, a readable storage medium is provided. The readable storage medium stores a computer program or instructions, and when the computer program or the instructions is/are executed, a computer is enabled to perform the method in the first aspect or any one of the possible designs of the first aspect, or perform the method in the second aspect or any one of the possible designs of the second aspect.

According to a fourth aspect, an embodiment of this application provides a computer program product. When a computer reads and executes the computer program product, the computer is enabled to perform the method in the first aspect or any one of the possible designs of the first aspect, or perform the method in the second aspect or any one of the possible designs of the second aspect.

Preferably, a communication system is provided. The communication system includes a communication device and at least one terminal device.

### BRIEF DESCRIPTION OF DRAWINGS

FIG. 1 is a schematic diagram of a network architecture of a communication system to which an embodiment of this application is applicable;
FIG. 2 is a schematic flowchart of a method for configuring a sounding reference signal SRS period according to an embodiment of this application;
FIG. 3 is a schematic diagram of a high-speed scenario according to an embodiment of this application;
FIG. 4 is a schematic diagram of a variation of a quantity of RRC connected users in a first cell in a high-speed scenario according to an embodiment of this application;
FIG. 5 is a schematic diagram of predicting a quantity of RRC connected users in a first cell in a high-speed scenario according to an embodiment of this application;
FIG. 6 is a schematic flowchart of another method for configuring a sounding reference signal SRS period according to an embodiment of this application;
FIG. 7 is a schematic diagram of historical statistical data of a quantity of RRC connected users in a first cell within a variation period according to an embodiment of this application.
FIG. 8 is a schematic diagram of a structure of a communication apparatus according to an embodiment of this application; and
FIG. 9 is a schematic diagram of a structure of another communication apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

The technical solutions of embodiments of this application may be used in various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WIMAX) communication system, and a fifth generation (5th generation, 5G) system or a new radio (new radio, NR) system, or is used in a future communication system or another similar communication system.

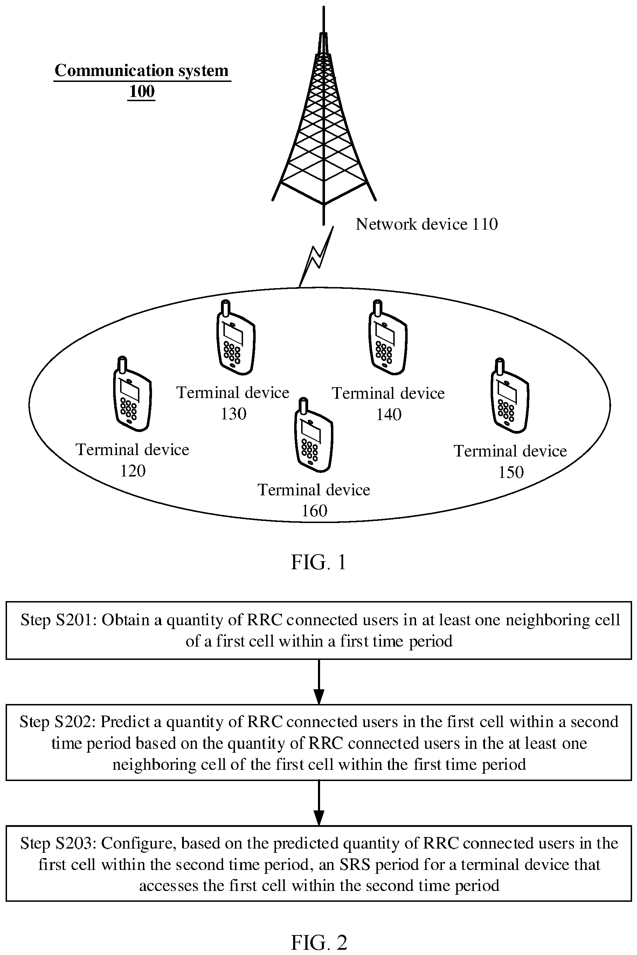

FIG. 1 is a schematic diagram of a network architecture of a communication system to which an embodiment of this application is applicable. The communication system 100 includes a network device 110 and at least one terminal device (a terminal device 120, a terminal device 130, a terminal device 140, a terminal device 150, and a terminal device 160 shown in FIG. 1). The network device 110 may communicate with the at least one terminal device (for example, the terminal device 120) through an uplink (uplink, UL) and a downlink (downlink, DL).

The network device 110 is a device that provides a radio communication function for a terminal device. The network device may be a node in a radio access network, or may be referred to as a base station, or may be referred to as a radio access network (radio access network, RAN) node (or device). The network device may be configured to: perform conversion between a received over-the-air frame and an Internet protocol (IP) packet, and serve as a router between the terminal device and a remaining part of an access network. The remaining part of the access network may include an IP network. The network device may further coordinate attribute management of an air interface. The network device includes but is not limited to a next-generation base station (g nodeB, gNB), an evolved NodeB (evolved node B, eNB), a radio network controller (radio network controller, RNC), a NodeB (node B, NB), a base station controller (base station controller, BSC), a base transceiver station (base transceiver station, BTS), a transmitting and receiving point (transmitting and receiving point, TRP), a home base station (for example, home evolved nodeB, or home node B, HNB), a baseband unit (baseband unit, BBU), a baseband pool BBU pool, a Wi-Fi access point (access point, AP), a transmitting point (transmitting point, TP), a mobile switching center, and a centralized unit (centralized unit, CU) and a distributed unit (distributed unit, DU) in a cloud access network (cloud radio access network, Cloud RAN) system, and the like in 5G, 6G, or even 7G.

It should be understood that the network device corresponds to different devices in different systems. For example, the network device may correspond to an eNB in a fourth generation mobile communication technology (the 4th generation, 4G) system, and corresponds to a 5G access network device, for example, a gNB, in a 5G system. The technical solutions provided in embodiments of this application may also be used in a future mobile communication system, for example, a 6G or 7G system. Therefore, the network device in FIG. 1 may also correspond to a network device in the future mobile communication system.

The terminal device (also referred to as UE) is a device having a radio transceiver function. The terminal device may be deployed on land, including an indoor device, an outdoor device, a handheld device, or a vehicle-mounted device, or may be deployed on the water (for example, on a ship), or may be deployed in the air (for example, on a plane, a balloon, or a satellite). The terminal device may communicate with a core network through a radio access network (radio access network, RAN), and exchange voice and/or data with the RAN. A terminal may be a mobile phone (mobile phone), a tablet (pad), a computer with the wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may also be sometimes referred to as user equipment (user equipment, UE), a mobile station, a remote station, or the like. A specific technology, a device form, and a name that are used by the terminal device are not limited in embodiments of this application. The terminal device may be used in but is not limited to a 5G, 6G, or even 7G communication system.

By way of example and not limitation, in embodiments of this application, the terminal device may alternatively be a wearable device. The wearable device may also be referred to as a wearable intelligent device, an intelligent wearable device, or the like, and is a generic term for wearable devices that are developed by applying wearable technologies to intelligent designs of daily wear, such as glasses, gloves, watches, clothes, and shoes. The wearable device is a portable device that can be directly worn by a user or integrated into clothes or an accessory of the user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to cooperate with other devices such as smartphones, for example, various smart bands, smart helmets or smart jewelries for monitoring physical signs.

The terminal device in embodiments of this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the built-in vehicle-mounted module, the vehicle-mounted module assembly, the vehicle-mounted component, the vehicle-mounted chip, or the vehicle-mounted unit to implement the method in this application.

It should be understood that there may be a plurality of network devices in the communication system 100, and each network device may provide a service for a plurality of terminal devices. A quantity of access network devices and a quantity of terminal devices in the communication system are not limited in embodiments of this application. The access network device in FIG. 1 and each terminal device in some or all of the plurality of terminal devices may implement the technical solutions provided in embodiments of this application.

It should be further understood that the terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of description such as "at least one type" is similar. The term "and/or" describes an association relationship of associated objects, and represents that three relationships may exist. For example, A and/or B may represent the following three cases: Only A exists, both A and B exist, and only B exists. In addition, unless otherwise specified, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, description of "first" and "second" does not necessarily indicate that objects are different.

### Embodiment 1

FIG. 2 is a schematic flowchart of a method for configuring a sounding reference signal SRS period according to an embodiment of this application. The method includes the following steps.

Step S201: A communication apparatus obtains a quantity of RRC connected users in at least one neighboring cell of a first cell within a first time period.

In this embodiment of this application, the communication apparatus may be the network device in the communication system shown in FIG. 1 or a chip in the network device. Coverage of the communication apparatus may include one or more cells. The first cell refers to one of cells covered by the communication apparatus. The at least one neighboring cell of the first cell may include a cell covered by the communication apparatus, or may include a cell covered by another communication apparatus (for example, another network device). This is not limited in this application.

If both a neighboring cell in the at least one neighboring cell and the first cell are covered by the communication apparatus, the communication apparatus may directly obtain a quantity of RRC connected users in the neighboring cell within the first time period, for example, directly read the quantity of RRC connected users from a memory. If the neighboring cell and the first cell are covered by different communication apparatuses, the communication apparatus may obtain, from another communication apparatus that manages the neighboring cell, the quantity of RRC connected users in the neighboring cell within the first time period by using an interface between the communication apparatuses.

The first time period may include a plurality of moments. For each neighboring cell in the at least one neighboring cell of the first cell, the quantity of RRC connected users in the neighboring cell within the first time period includes a quantity of RRC connected users in the neighboring cell at various moments within the first time period.

Step S202: The communication apparatus predicts a quantity of RRC connected users in the first cell within a second time period based on the quantity of RRC connected users in the at least one neighboring cell of the first cell within the first time period, where the second time period is later than the first time period.

In this embodiment of this application, the communication apparatus may predict the quantity of RRC connected users in the first cell within the second time period before the second time period arrives. The predicted quantity of RRC connected users in the first cell within the second time period is used to configure an SRS period for the first cell within the second time period, that is, a period in which a terminal device accessing the first cell within the second time period sends an SRS signal.

Specifically, the communication apparatus may predict the quantity of RRC connected users in the first cell within the second time period in the following manner:

For each moment within the first time period, the communication apparatus sums up quantities of RRC connected users in the at least one neighboring cell of the first cell at the moment to obtain a sum value; and then uses a largest value in sum values corresponding to various moments included within the first time period as the predicted quantity of RRC connected users in the first cell within the second time period.

That is, assuming that the sum of quantities of RRC connected users in the at least one neighboring cell of the first cell reaches a maximum value at a first moment within the first time period, the predicted quantity of RRC connected users in the first cell within the second time period is the sum of the quantities of RRC connected users in the at least one neighboring cell of the first cell corresponding to the first moment, that is, the maximum value of the sum of the quantities of RRC connected users in the at least one neighboring cell of the first cell. It may be understood that, a sum of the quantities of RRC connected users in the at least one neighboring cell corresponding to the first moment is greater than or equal to a sum of the quantities of RRC connected users in the at least one neighboring cell corresponding to another moment within the first time period.

It should be understood that, in this embodiment of this application, the first time period is before the second time period, and the first time period may be adjacent to or may not be adjacent to the second time period. A relationship between the first time period and the second time period may be configured by the communication apparatus, or may be predefined or preconfigured. This is not limited in this application. In addition, the first time period and the second time period may have same duration or different durations. This is not limited in this application either.

Step S203: The communication apparatus configures, based on the predicted quantity of RRC connected users in the first cell within the second time period, an SRS period for the terminal device that accesses the first cell within the second time period.

Specifically, the communication apparatus configures, based on the predicted quantity of RRC connected users in the first cell within the second time period and a mapping relationship between the quantity of RRC connected users and the SRS period, the SRS period for the terminal device that accesses the first cell within the second time period. The mapping relationship between the quantity of RRC connected users and the SRS period may be configured by the communication apparatus, or may be predefined or preconfigured, or may be adjusted by the communication apparatus in a timely manner based on a requirement. This is not limited in this application.

According to the foregoing technical solution, before the second time period arrives, the communication apparatus may predict the quantity of RRC connected users in the first cell within the second time period based on the quantity of RRC connected users in the at least one neighboring cell of the first cell within the first time period, to configure the SRS period for the terminal device that accesses the first cell within the second time period. It can be learned that the communication apparatus may preconfigure, for the first cell, an SRS period that is available within the second time period, and does not need to reconfigure the SRS period within the second time period. Therefore, excessively frequent SRS period adjustment can be avoided, and signaling overheads for configuring the SRS period can be effectively reduced. In addition, the configured SRS period can meet an access situation of the first cell within the second time period.

Further, in this embodiment of this application, the communication apparatus may periodically configure the SRS period for the first cell by using duration of the second time period as a period. In other words, the communication apparatus may configure the SRS period for the first cell once every duration of one second time period. Correspondingly, step S201 to step S203 may be repeatedly performed based on the duration of the second time period, and are performed once every duration of the second time period. In this way, the SRS period for the first cell can be adjusted in a timely manner, to meet a communication requirement of the terminal device.

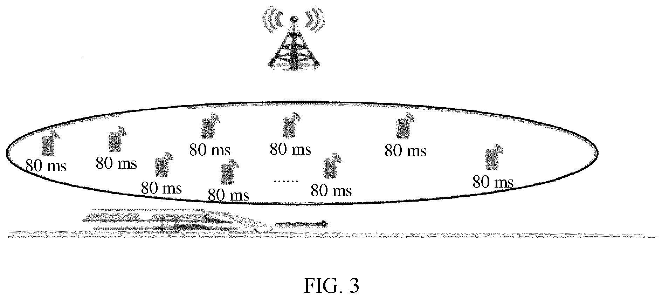

The technical solutions provided in embodiments of this application may be further applied to a high-speed scenario, for example, a high-speed railway scenario shown in FIG. 3. In the high-speed scenario, terminal devices have features such as high-speed movement, fast cell handover-in and handover-out, and batch cell handover-in and handover-out. A quantity of RRC connected users in a cell may also change rapidly due to the high-speed movement of the terminal devices. If the SRS period is configured based on a quantity of RRC connected users counted in real time, a configuration speed for the SRS period may not keep up with a moving speed of the terminal devices due to a signaling delay. Consequently, SRS period configuration is inaccurate, and repeated reconfiguration is required. However, in this embodiment of this application, a quantity of users in the first cell within the second time period may be predicted based on a sum of largest quantities of RRC connected users in the at least one neighboring cell of the first cell within the first time period before the second time period. Therefore, the largest quantity of RRC connected users who may access the first cell within the second time period may be obtained, the SRS period within the second time period is configured based on the largest quantity of RRC connected users. This can effectively avoid a problem that when a large quantity of terminal devices access the first cell in batches within the second time period, some terminal devices experience call drops because no SRS resources are allocated to the terminal devices.

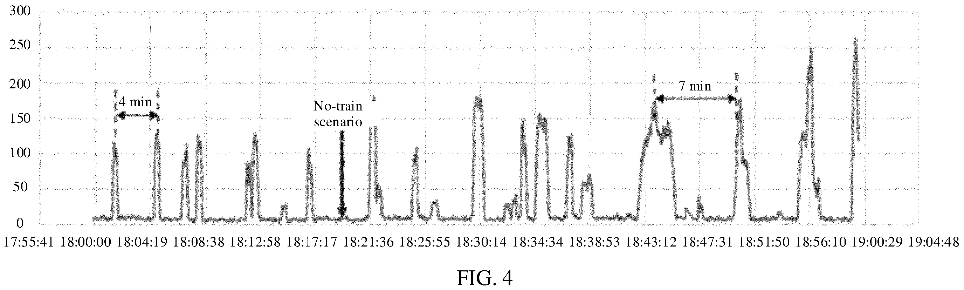

For example, as shown in FIG. 3, a first cell is deployed along a high-speed railway, and a quantity of RRC connected users in the first cell presents a variation rule shown in FIG. 4. When a high-speed train passes by, a large quantity of terminal devices are quickly handed over in the cell, and a quantity of RRC connected users in the first cell quickly reaches a peak value. After the high-speed train passes by, the quantity of RRC connected users in the first cell quickly restores to a low level and remains basically stable.

According to the technical solution provided in this embodiment of this application, the communication apparatus may set, based on information such as a cell attribute of the first cell, a train timetable, and a passenger capacity of the train, the duration of the second time period as average time needed by one high-speed train to pass through the first cell, and set duration of the first time period to be less than a minimum departure interval between two high-speed trains that are chronologically adjacent in the first cell.

The communication apparatus may further periodically configure the SRS period for the first cell based on the duration of the second time period. Specifically, the communication apparatus may determine, before each second time period arrives, a time period before the second time period as the first time period, and calculate a largest value of sums of quantities of RRC connected users in various neighboring cells of the first cell within the first time period. For example, the duration of the second time period may be 15s, and the first time period may be 15s, 10s, or 5s before the second time period. Whenever one second time period is coming, the communication apparatus may obtain the quantity of RRC connected users in each neighboring cell of the first cell in the 15s, 10s, or 5s before the second time period. Subsequently, the communication apparatus determines the largest value of the sums of the quantities of RRC connected users in the various neighboring cells of the first cell within the first time period as the predicted quantity of RRC connected users in the first cell within the second time period. Furthermore, the communication apparatus may configure, based on the predicted quantity of RRC connected users in the first cell within the second time period, the SRS period for the terminal device that accesses the first cell within the second time period.

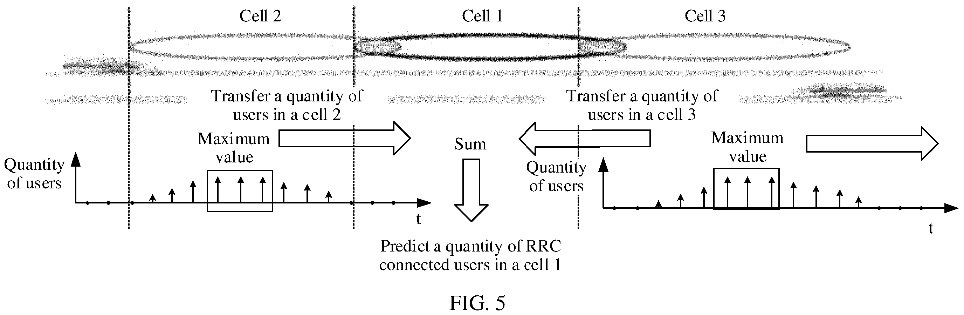

As shown in FIG. 5, the first cell is close to the various neighboring cells of the first cell in terms of geographical location, and a train passing through a neighboring cell of the first cell may also pass through the first cell. That is, in the high-speed railway scenario, when the train passes through the neighboring cell of the first cell, a quantity of RRC connected users in the neighboring cell of the first cell may be quickly transferred to the first cell, and consequently the quantity of RRC connected users in the first cell sharply increases. In this way, the quantity of RRC connected users in the first cell within the second time period is predicted by calculating the sum of the quantity of RRC connected users in the at least one neighboring cell of the first cell within the first time period before the second time period, and the SRS period for the first cell within the second time period is preconfigured based on the predicted quantity of RRC connected users in the first cell within the second time period. This can effectively avoid untimely SRS period configuration and excessively large reconfiguration signaling overheads that are caused because an SRS period adjustment speed cannot keep up with a moving speed of the train. Therefore, a mobility requirement of the terminal device is met.

In a possible design, in this embodiment of this application, the communication apparatus may further count the quantity of RRC connected users in the first cell in real time, and periodically send the counted quantity of RRC connected users in the first cell to the at least one neighboring cell of the first cell, and the counted quantity of RRC connected users in the first cell may be used to configure an SRS period for a neighboring cell. Correspondingly, in step S201, each neighboring cell of the first cell may also count the quantity of RRC connected users in the neighboring cell in real time, and periodically send the quantity of RRC connected users to the first cell, so that the communication apparatus performs step S201 to step S203 by using the quantity of RRC connected users counted by the neighboring cell, and configures the SRS period for the first cell. It should be understood that a period in which each neighboring cell of the first cell sends the counted quantity of RRC connected users to the first cell may be the same as or different from the duration of the first time period or the duration of the second time period. This is not limited in this application.

### Embodiment 2

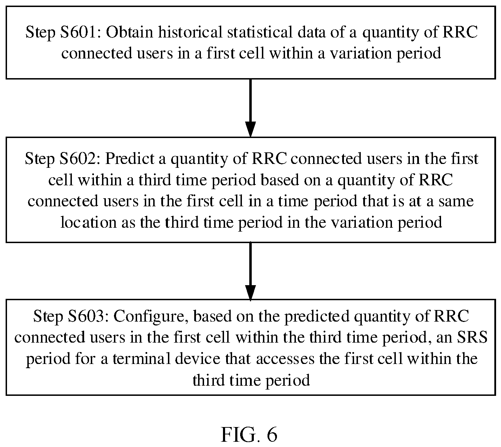

FIG. 6 is a schematic flowchart of another method for configuring a sounding reference signal SRS period according to an embodiment of this application. The method includes the following steps.

Step S601: A communication apparatus obtains historical statistical data of a quantity of RRC connected users in a first cell within a variation period, where the variation period includes a plurality of time periods, and the historical statistical data includes a quantity of RRC connected users in the first cell in each time period of the variation period.

In this embodiment of this application, the quantity of RRC connected users in the first cell may have a periodic variation rule. The historical statistical data of the quantity of RRC connected users in the first cell within the variation period may be used to reflect a variation rule of the quantity of RRC connected users in the first cell. The variation period may be understood as a period in which the quantity of RRC connected users in the first cell periodically varies.

Specifically, the historical statistical data of the quantity of RRC connected users in the first cell within the variation period may be obtained in the following manner:

First, the communication apparatus may obtain a quantity of RRC connected users in the first cell within a past set duration range. To obtain sufficient historical data to draw up the variation rule of the quantity of RRC connected users in the first cell, the set duration range may be set to a larger value, for example, may be set to one month, two months, or even half a year in the past. It should be understood that the set duration range may be configured by the communication apparatus, or may be predefined or configured. This is not limited in this application.

Then, the communication apparatus may determine a variation period of the quantity of RRC connected users based on the quantity of RRC connected users in the first cell within the past set duration range. The set duration range includes a plurality of variation periods. This step may also be understood as determining a periodic variation period of the quantity of RRC connected users in the first cell. For example, the variation period may be one day, two days, three days, one week, two weeks, or the like. If the variation period is one week, it may indicate that a variation of the quantity of RRC connected users in the first cell in each week is the same or similar.

Further, for each time period in the variation period, the communication apparatus may determine a quantity of RRC connected users in the first cell in the time period in the historical statistical data based on quantities of RRC connected users in the first cell in the time period in the plurality of variation periods included within the set duration range. For example, in a possible implementation, the communication apparatus may determine an average value of the quantities of RRC connected users in the first cell in the time period in the plurality of variation periods included within the set duration range as the quantity of RRC connected users in the first cell in the time period in the historical statistical data. Alternatively, in another possible design, the communication apparatus may perform data filtering (for example, an ALPHA filtering method) on the quantities of RRC connected users in the first cell in the time period in the plurality of variation periods included within the set duration range, to obtain the quantity of RRC connected users in the first cell in the time period in the historical statistical data. Alternatively, in another possible design, the communication apparatus further determines the quantity of RRC connected users in the first cell in the time period in the historical statistical data based on a cumulative distribution curve (CDF curve) of the quantities of RRC connected users in the first cell in the time period in the plurality of variation periods included within the set duration range. For example, the CDF curve may be drawn based on the quantities of RRC connected users in the first cell in the time period in the plurality of variation periods included within the set duration range, and a value corresponding to a point x% in the CDF curve is obtained and is used as the quantity of RRC connected users in the first cell in the time period in the historical statistical data.

To accurately reflect the variation rule of the quantity of RRC connected users in the first cell, in this embodiment of this application, the communication apparatus may divide one variation period of the quantity of RRC connected users in the first cell into a plurality of time periods. One time period may be understood as a statistical granularity, in terms of time, of statistical data of the quantity of RRC connected users in the first cell, that is, one time period corresponds to statistical data of a quantity of RRC connected users in the first cell. For example, one variation period may be one week, and one time period is 15 minutes. The communication apparatus may divide one variation period into a plurality of time periods based on a time granularity of 15 minutes, and determine, one by one, statistical data of a quantity of connected users in the first cell corresponding to each time period.

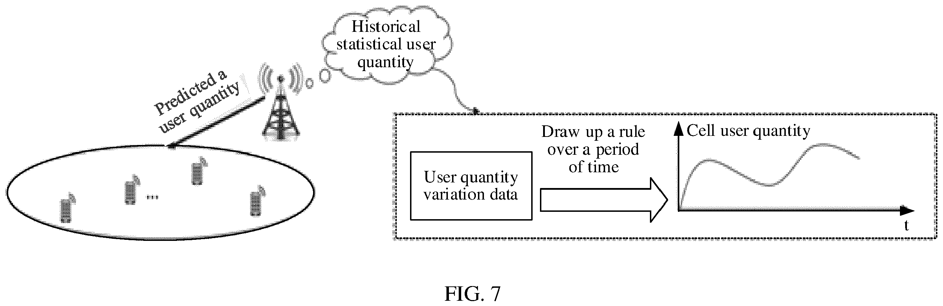

In this way, the communication apparatus may obtain quantities of RRC connected users in the first cell in various time periods in the variation period, to obtain the historical statistical data of the quantity of RRC connected users in the first cell in the variation period, that is, the variation rule of the quantity of RRC connected users in the first cell. The variation rule of the quantity of RRC connected users in the first cell may also be represented in a form of a function curve shown in FIG. 7, or may be represented in a form of a data table or another chart. This is not limited in this application.

Step S602: The communication apparatus predicts a quantity of RRC connected users in the first cell within a third time period based on a quantity of RRC connected users in the first cell in a time period that is at a same location as the third time period in the variation period.

Step S603: The communication apparatus configures, based on the predicted quantity of RRC connected users in the first cell within the third time period, an SRS period for a terminal device that accesses the first cell within the third time period.

For example, the communication apparatus needs to configure an SRS period for the first cell within the third time period. If the variation period of the quantity of RRC connected users in the first cell is one week, one time period is 15 minutes, and the third time period ranges from 10:00 AM to 10: 15 AM on Monday, before the third time period arrives, the communication apparatus may determine, based on the historical statistical data of the quantity of RRC connected users in the first cell within the variation period, a quantity of RRC connected users in the first cell that is corresponding to 10:00 AM to 10: 15 AM on Monday in the historical statistical data as a predicted quantity of RRC connected users in the first cell within the third time period. Then, the communication apparatus may configure, based on the predicted quantity of RRC connected users in the first cell within the third time period, the SRS period for the terminal device that accesses the first cell within the third time period.

According to the foregoing technical solution, before the third time period arrives, the communication apparatus may predict the quantity of RRC connected users in the first cell within the third time period based on a historical variation rule of the quantity of RRC connected users in the first cell, to configure the SRS period for the terminal device that accesses the first cell within the third time period. It can be learned that the communication apparatus may preconfigure, for the first cell, an SRS period that is available within the third time period, and does not need to reconfigure the SRS period within the third time period. Therefore, excessively frequent SRS period adjustment can be avoided, and signaling overheads for configuring the SRS period can be effectively reduced. In addition, the configured SRS period can meet an access situation of the first cell within the third time period.

It should be noted that the two methods for configuring an SRS period provided in embodiments of this application may be understood as two manners for configuring an SRS period. The communication apparatus may determine, based on the cell attribute of the first cell, an application scenario in which the first cell is located, and then select a manner for configuring the SRS period for the first cell. For example, if the first cell is deployed along a high-speed railway, considering that terminal devices in the first cell may move at a high speed and be handed over in or handed over out in batches, the communication apparatus may use the method for configuring an SRS period described in Embodiment 1. If the first cell is deployed in a large public place (for example, a scenario such as a stadium, a campus, a teacher, a station, or a traffic light), considering that a large quantity of users may be handed over in or handed over out of the first cell in batches in a short time, but do not move at a high speed, the communication apparatus may use the method for configuring an SRS period in Embodiment 2. It should be understood that the technical features described in the foregoing two embodiments may also be used in combination. This is not limited in this application.

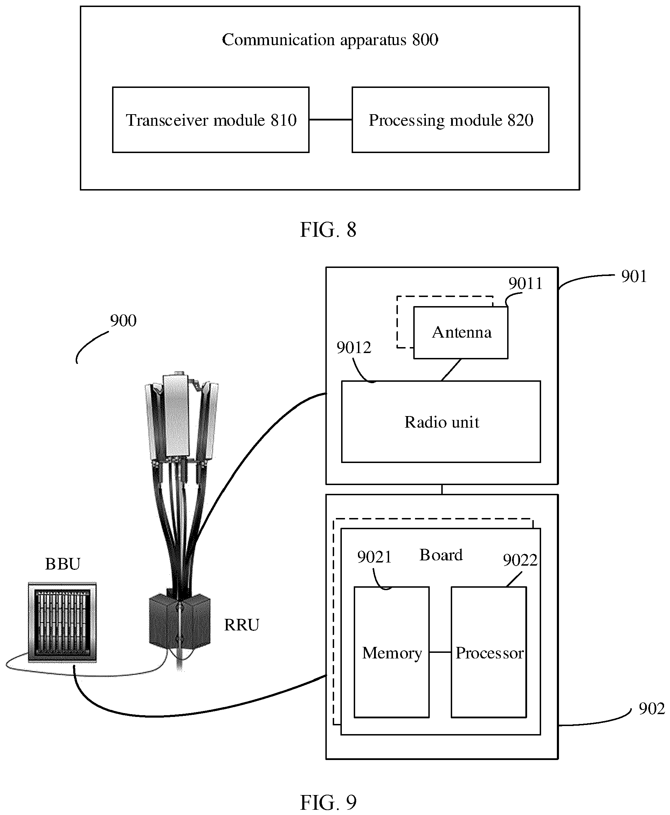

An embodiment of this application further provides a communication apparatus. FIG. 8 is a schematic diagram of a structure of a communication apparatus according to an embodiment of this application. The communication apparatus 800 includes a transceiver module 810 and a processing module 820. The communication apparatus may be configured to implement functions of the communication apparatus in any one of the foregoing method embodiments. For example, the communication apparatus may be a network device or a chip included in a network device.

When the communication apparatus is used as a network device and executes the method embodiment shown in FIG. 2, the transceiver module 810 is configured to obtain a quantity of radio resource control RRC connected users in at least one neighboring cell of a first cell within a first time period. The processing module 820 is configured to predict a quantity of RRC connected users in the first cell within a second time period based on the quantity of RRC connected users in the at least one neighboring cell of the first cell within the first time period, and configure, based on the predicted quantity of RRC connected users in the first cell within the second time period, an SRS period for a terminal device that accesses the first cell within the second time period. The second time period is later than the first time period.

In a possible design, a quantity of radio resource control RRC connected users in each neighboring cell within the first time period includes a quantity of RRC connected users in the neighboring cell at each moment of the first time period. The predicted quantity of RRC connected users in the first cell within the second time period is a sum of quantities of RRC connected users in the at least one neighboring cell of the first cell at a first moment of the first time period, and the sum of the quantities of RRC connected users in the at least one neighboring cell at the first moment is greater than or equal to a sum of quantities of RRC connected users in the at least one neighboring cell at another moment of the first time period.

In a possible design, the processing module 820 is specifically configured to configure, based on the predicted quantity of RRC connected users in the first cell within the second time period and a mapping relationship between the quantity of RRC connected users and the SRS period, the SRS period for the terminal device that accesses the first cell within the second time period.

In a possible design, the processing module 820 is further configured to count a quantity of RRC connected users in the first cell in real time. The transceiver module 810 is further configured to periodically send the counted quantity of RRC connected users in the first cell to the at least one neighboring cell of the first cell, and the quantity of RRC connected users in the first cell counted in real time is used to configure an SRS period for each neighboring cell.

It should be understood that the processing module 820 in the communication apparatus may be implemented by a processor or a processor-related circuit component, and the transceiver module 810 may be implemented by a transceiver or a transceiver-related circuit component. Operations and/or functions of various modules in the communication apparatus are separately used to implement corresponding procedures of the method shown in FIG. 2. For brevity, details are not described herein again.

FIG. 9 is another schematic diagram of a structure of a communication apparatus according to an embodiment of this application. The communication apparatus may be specifically a network device, for example, a base station, configured to implement functions of a network device in any one of the foregoing method embodiments.

The network device includes one or more radio units such as a remote radio unit (remote radio unit, RRU) 901 and one or more baseband units (baseband units, BBUs) (which may also be referred to as a digital unit, digital unit, DU) 902. The RRU 901 may be referred to as a transceiver unit, a transceiver, a transceiver circuit, a transceiver, or the like, and may include at least one antenna 9011 and a radio unit 9012. The RRU 901 is mainly configured to send and receive radio frequency signals and perform conversion between a radio frequency signal and a baseband signal. The BBU 902 is mainly configured to: perform baseband processing, control the base station, and the like. The RRU 901 and the BBU 902 may be physically disposed together, or may be physically separated, that is, the base station is a distributed base station.

The BBU 902 is a control center of the base station, may also be referred to as a processing unit, and is mainly configured to complete a baseband processing function such as channel coding, multiplexing, modulation, or spreading. For example, the BBU (the processing unit) 902 may be configured to control the base station to perform an operation procedure for the network device in the foregoing method embodiments.

In an example, the BBU 902 may include one or more boards, and the boards may jointly support a radio access network (for example, an LTE network) having a single access standard, or may separately support radio access networks (for example, the LTE network, a 5G network, or another network) having different access standards. The BBU 902 may further include a memory 9021 and a 910022. The memory 10021 is configured to store necessary instructions and necessary data. The processor 9022 is configured to control the base station to perform a necessary action, for example, is configured to control the base station to perform a sending operation in the foregoing method embodiments. The memory 9021 and the processor 9022 may serve one or more boards. In other words, a memory and a processor may be deployed on each board. Alternatively, a plurality of boards may share a same memory and a same processor. In addition, a necessary circuit may be further disposed on each board.

An embodiment of this application further provides a chip system, including a processor. The processor is coupled to a memory. The memory is configured to store a program or instructions. When the program or the instructions is/are executed by the processor, the chip system is enabled to implement the method in any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software codes stored in the memory.

Optionally, there may also be one or more memories in the chip system. The memory may be integrated with the processor, or may be disposed separately from the processor. This is not limited in this application. For example, the memory may be a non-transitory processor such as a read-only memory (ROM). The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), or a programmable controller (programmable logic device, PLD) or another integrated chip.

It should be understood that steps in the foregoing method embodiments can be completed by using a hardware integrated logical circuit in the processor or instructions in a form of software. The steps of the methods according to embodiments of this application may be directly performed and completed by a hardware processor, or may be performed and completed by using a combination of hardware and software modules in the processor.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a network device and at least one terminal device.

It should be understood that, the processor mentioned in embodiments of this application may be a central processing unit (central processing unit, CPU), or may further be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate, a transistor logic device, or a discrete hardware component, the memory (storage module) is integrated into the processor.

It should be noted that the memory described in this specification is intended to include but not limited to these memories and any memory of another appropriate type.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiment. Details are not described herein again.

In the several embodiments provided in this application, it should be understood that the disclosed systems, apparatuses, and methods may be implemented in other manners. For example, the foregoing described apparatus embodiments are merely examples. For example, division of the units is merely a logical function division and may be another division during actual implementation. For example, a plurality of units or components may be combined or integrated into another system, or some features may be ignored or may not be performed. In addition, the displayed or discussed mutual coupling or direct coupling or communication connection may be implemented through direct coupling or communication connection between some interfaces, apparatuses or units, or may be implemented in electrical, mechanical, or other forms.

The units described as separate parts may or may not be physically separated, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on this understanding, the technical solutions of this application essentially, or the part contributing to the prior art, or some of the technical solutions may be implemented in a form of a software product. The computer software product is stored in a storage medium, and includes a plurality of instructions for instructing a computer device (which may be, for example, a personal computer, a server, or a network device) to perform all or some of the steps of the methods described in embodiments of this application. The foregoing storage medium includes: any medium that can store program codes, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope of the appended claims shall fall within the protection scope of this application. Therefore, the protection scope of this application shall be subject to the protection scope of the claims.

## Claims

1. A method for configuring a sounding reference signal, SRS, period, wherein the method comprises:
obtaining (S201), by a communication apparatus, a quantity of radio resource control, RRC, connected users in at least one neighboring cell of a first cell within a first time period;
predicting (S202), by the communication apparatus, a quantity of RRC connected users in the first cell within a second time period based on the quantity of RRC connected users in the at least one neighboring cell of the first cell within the first time period; and
configuring (S203), by the communication apparatus based on the predicted quantity of RRC connected users in the first cell within the second time period, an SRS period for a terminal device that accesses the first cell within the second time period.

2. The method according to claim 1, wherein a quantity of radio resource control RRC connected users in each neighboring cell of the at least one neighboring cell within the first time period comprises a quantity of RRC connected users in the neighboring cell at various moments of the first time period; and
the predicted quantity of RRC connected users in the first cell within the second time period is a sum of quantities of RRC connected users in the at least one neighboring cell at a first moment of the first time period, and the sum of the quantities of RRC connected users in the at least one neighboring cell at the first moment is greater than or equal to a sum of quantities of RRC connected users in the at least one neighboring cell at another moment of the first time period.

3. The method according to claim 1 or 2, wherein the configuring, by the communication apparatus, an SRS period for a terminal device that accesses the first cell within the second time period comprises:
configuring, by the communication apparatus based on the predicted quantity of RRC connected users in the first cell within the second time period and a mapping relationship between the quantity of RRC connected users and the SRS period, the SRS period for the terminal device that accesses the first cell within the second time period.

4. The method according to any one of claims 1 to 3, wherein the method further comprises:
counting, by the communication apparatus, a quantity of RRC connected users in the first cell in real time; and
periodically sending, by the communication apparatus, the counted quantity of RRC connected users in the first cell to the at least one neighboring cell, wherein the quantity of RRC connected users in the first cell counted in real time is used to configure an SRS period for the neighboring cell.

5. A method for configuring a sounding reference signal, SRS, period, wherein the method comprises:
obtaining (S601), by a communication apparatus, historical statistical data of a quantity of radio resource control, RRC, connected users in a first cell within a variation period, wherein the variation period comprises a plurality of time periods, and the historical statistical data comprises a quantity of RRC connected users in the first cell in each time period of the variation period;
predicting (S602), by the communication apparatus, a quantity of RRC connected users in the first cell within a third time period based on a quantity of RRC connected users in the first cell in a time period that is at a same location as the third time period in the variation period; and
configuring (S603), by the communication apparatus based on the predicted quantity of RRC connected users in the first cell within the third time period, an SRS period for a terminal device that accesses the first cell within the third time period.

6. The method according to claim 5, wherein the obtaining, by a communication apparatus, historical statistical data of a quantity of RRC connected users in a first cell within a variation period comprises:
obtaining, by the communication apparatus, a quantity of RRC connected users in the first cell within a past set duration range;
determining, by the communication apparatus, the variation period based on the quantity of RRC connected users in the first cell within the past set duration range, wherein the set duration range comprises a plurality of variation periods; and
for each time period in the variation period, determining, by the communication apparatus, a quantity of RRC connected users in the first cell in the time period in the historical statistical data based on quantities of RRC connected users in the first cell in the time period in the plurality of variation periods comprised within the set duration range.

7. The method according to claim 6, wherein the quantity of RRC connected users in the first cell in the time period in the historical statistical data is an average value of the quantities of RRC connected users in the first cell in the time period in the plurality of variation periods comprised within the set duration range; or
the quantity of RRC connected users in the first cell in the time period in the historical statistical data is a value obtained after data filtering is performed on the quantities of RRC connected users in the first cell in the time period in the plurality of variation periods comprised within the set duration range; or the determining, by the communication apparatus, a quantity of RRC connected users in the first cell in the time period in the historical statistical data comprises:
determining, by the communication apparatus, the quantity of RRC connected users in the first cell in the time period in the historical statistical data based on a cumulative distribution curve of the quantities of RRC connected users in the first cell in the time period in the plurality of variation periods comprised within the set duration range.

8. A communication apparatus, wherein the apparatus comprises:
a transceiver module (810), configured to obtain a quantity of radio resource control, RRC, connected users in at least one neighboring cell of a first cell within a first time period; and
a processing module (820), configured to predict a quantity of RRC connected users in the first cell within a second time period based on the quantity of RRC connected users in the at least one neighboring cell of the first cell within the first time period, wherein
the processing module (820) is further configured to configure, based on the predicted quantity of RRC connected users in the first cell within the second time period, an SRS period for a terminal device that accesses the first cell within the second time period.

9. The apparatus according to claim 8, wherein a quantity of radio resource control RRC connected users in each neighboring cell of the at least one neighboring cell within the first time period comprises a quantity of RRC connected users in the neighboring cell at each moment of the first time period; and
the predicted quantity of RRC connected users in the first cell within the second time period is a sum of quantities of RRC connected users in the at least one neighboring cell at a first moment of the first time period, and the sum of the quantities of RRC connected users in the at least one neighboring cell at the first moment is greater than or equal to a sum of quantities of RRC connected users in the at least one neighboring cell at another moment of the first time period.

10. The apparatus according to claim 8 or 9, wherein the processing module is specifically configured to:
configure, based on the predicted quantity of RRC connected users in the first cell within the second time period and a mapping relationship between the quantity of RRC connected users and the SRS period, the SRS period for the terminal device that accesses the first cell within the second time period.

11. The apparatus according to any one of claims 8 to 10, wherein the processing module is further configured to count a quantity of RRC connected users in the first cell in real time; and
the transceiver module is further configured to periodically send the counted quantity of RRC connected users in the first cell to the at least one neighboring cell, wherein the quantity of RRC connected users in the first cell counted in real time is used to configure an SRS period for the neighboring cell.

12. A communication apparatus, wherein the apparatus comprises:
a transceiver module (810), configured to obtain historical statistical data of a quantity of radio resource control, RRC, connected users in a first cell within a variation period, wherein the variation period comprises a plurality of time periods, and the historical statistical data comprises a quantity of RRC connected users in the first cell in each time period of the variation period; and
a processing module (820), configured to predict a quantity of RRC connected users in the first cell within a third time period based on a quantity of RRC connected users in the first cell in a time period that is at a same location as the third time period in the variation period, wherein
the processing module (820) is further configured to configure, based on the predicted quantity of RRC connected users in the first cell within the third time period, an SRS period for a terminal device that accesses the first cell within the third time period.

13. The apparatus according to claim 12, wherein the transceiver module is specifically configured to:
obtain a quantity of RRC connected users in the first cell within a past set duration range;
determine the variation period based on the quantity of RRC connected users in the first cell within the past set duration range, wherein the set duration range comprises a plurality of variation periods; and
for each time period in the variation period, determine a quantity of RRC connected users in the first cell in the time period in the historical statistical data based on quantities of RRC connected users in the first cell in the time period in the plurality of variation periods comprised within the set duration range.

14. The apparatus according to claim 13, wherein the quantity of RRC connected users in the first cell in the time period in the historical statistical data is an average value of the quantities of RRC connected users in the first cell in the time period in the plurality of variation periods comprised within the set duration range; or
the quantity of RRC connected users in the first cell in the time period in the historical statistical data is a value obtained after data filtering is performed on the quantities of RRC connected users in the first cell in the time period in the plurality of variation periods comprised within the set duration range; or the processing module is further configured to:
determine the quantity of RRC connected users in the first cell in the time period in the historical statistical data based on a cumulative distribution curve of the quantities of RRC connected users in the first cell in the time period in the plurality of variation periods comprised within the set duration range.

## Patentansprüche

1. Verfahren zum Konfigurieren einer Sondierungsreferenzsignal- bzw. SRS-Periode, wobei das Verfahren Folgendes umfasst:
Erhalten (S201), durch eine Kommunikationsvorrichtung, einer Anzahl von mit einer Funkbetriebsmittelsteuerung bzw. RRC verbundenen Benutzern in mindestens einer benachbarten Zelle einer ersten Zelle in einer ersten Zeitperiode,
Vorhersagen (S202), durch die Kommunikationsvorrichtung, einer Anzahl von mit einer RRC verbundenen Benutzern in der ersten Zelle in einer zweiten Zeitperiode basierend auf der Anzahl von mit einer RRC verbundenen Benutzern in der mindestens einen benachbarten Zelle der ersten Zelle in der ersten Zeitperiode; und
Konfigurieren (S203), durch die Kommunikationsvorrichtung basierend auf der vorhergesagten Anzahl von mit einer RRC verbundenen Benutzern in der ersten Zelle in der zweiten Zeitperiode, einer SRS-Periode für ein Endgerät, das auf die erste Zelle in der zweiten Zeitperiode zugreift.

2. Verfahren nach Anspruch 1, wobei eine Anzahl von mit einer Funkbetriebsmittelsteuerung bzw. RRC verbundenen Benutzern in jeder benachbarten Zelle der mindestens einen benachbarten Zelle in der ersten Zeitperiode eine Anzahl von mit einer RRC verbundenen Benutzern in der benachbarten Zelle zu verschiedenen Zeitpunkten der ersten Zeitperiode umfasst; und
die vorhergesagte Anzahl von mit einer RRC verbundenen Benutzern in der ersten Zelle in der zweiten Zeitperiode eine Summe von Anzahlen von mit einer RRC verbundenen Benutzern in der mindestens einen benachbarten Zelle zu einem ersten Zeitpunkt der ersten Zeitperiode ist und die Summe der Anzahlen von mit einer RRC verbundenen Benutzern in der mindestens einen benachbarten Zelle zu dem ersten Zeitpunkt größer als eine oder gleich einer Summe von Anzahlen von mit einer RRC verbundenen Benutzern in der mindestens einen benachbarten Zelle zu einem anderen Zeitpunkt der ersten Zeitperiode ist.

3. Verfahren nach Anspruch 1 oder 2, wobei das Konfigurieren, durch die Kommunikationsvorrichtung, einer SRS-Periode für ein Endgerät, das auf die erste Zelle in der zweiten Zeitperiode zugreift, Folgendes umfasst:
Konfigurieren, durch die Kommunikationsvorrichtung basierend auf der vorhergesagten Anzahl von mit einer RRC verbundenen Benutzern in der ersten Zelle in der zweiten Zeitperiode und einer Abbildungsbeziehung zwischen der Anzahl von mit einer RRC verbundenen Benutzern und der SRS-Periode, der SRS-Periode für das Endgerät, das auf die erste Zelle in der zweiten Zeitperiode zugreift.

4. Verfahren nach einem der Ansprüche 1 bis 3, wobei das Verfahren ferner Folgendes umfasst:
Zählen, durch die Kommunikationsvorrichtung, einer Anzahl von mit einer RRC verbundenen Benutzern in der ersten Zelle in Echtzeit; und
periodisches Senden, durch die Kommunikationsvorrichtung, der gezählten Anzahl von mit einer RRC verbundenen Benutzern in der ersten Zelle an die mindestens eine benachbarte Zelle, wobei die in Echtzeit gezählte Anzahl von mit einer RRC verbundenen Benutzern in der ersten Zelle verwendet wird, um eine SRS-Periode für die benachbarte Zelle zu konfigurieren.

5. Verfahren zum Konfigurieren einer Sondierungsreferenzsignal- bzw. SRS-Periode, wobei das Verfahren Folgendes umfasst:
Erhalten (S601), durch eine Kommunikationsvorrichtung, von historischen statistischen Daten einer Anzahl von mit einer Funkbetriebsmittelsteuerung bzw. RRC verbundenen Benutzern in einer ersten Zelle in einer Variationsperiode, wobei die Variationsperiode eine Vielzahl von Zeitperioden umfasst und die historischen statistischen Daten eine Anzahl von mit einer RRC verbundenen Benutzern in der ersten Zelle in jeder Zeitperiode der Variationsperiode umfassen;
Vorhersagen (S602), durch die Kommunikationsvorrichtung, einer Anzahl von mit einer RRC verbundenen Benutzern in der ersten Zelle in einer dritten Zeitperiode basierend auf einer Anzahl von mit einer RRC verbundenen Benutzern in der ersten Zelle in einer Zeitperiode, die an einem selben Ort wie die dritte Zeitperiode in der Variationsperiode ist; und
Konfigurieren (S603), durch die Kommunikationsvorrichtung basierend auf der vorhergesagten Anzahl von mit einer RRC verbundenen Benutzern in der ersten Zelle in der dritten Zeitperiode, einer SRS-Periode für ein Endgerät, das auf die erste Zelle in der dritten Zeitperiode zugreift.

6. Verfahren nach Anspruch 5, wobei das Erhalten, durch eine Kommunikationsvorrichtung, von historischen statistischen Daten einer Anzahl von mit einer RRC verbundenen Benutzern in einer ersten Zelle in einer Variationsperiode Folgendes umfasst:
Erhalten, durch die Kommunikationsvorrichtung, einer Anzahl von mit einer RRC verbundenen Benutzern in der ersten Zelle in einem früher eingestellten Dauerbereich, Bestimmen, durch die Kommunikationsvorrichtung, der Variationsperiode basierend auf der Anzahl von mit einer RRC verbundenen Benutzern in der ersten Zelle in dem früher eingestellten Dauerbereich, wobei der eingestellte Dauerbereich eine Vielzahl von Variationsperioden umfasst; und
für jede Zeitperiode in der Variationsperiode Bestimmen, durch die Kommunikationsvorrichtung, einer Anzahl von mit einer RRC verbundenen Benutzern in der ersten Zelle in der Zeitperiode in den historischen statistischen Daten basierend auf Anzahlen von mit einer RRC verbundenen Benutzern in der ersten Zelle in der Zeitperiode in der Vielzahl von Variationsperioden, die in dem eingestellten Dauerbereich enthalten sind.

7. Verfahren nach Anspruch 6, wobei die Anzahl von mit einer RRC verbundenen Benutzern in der ersten Zelle in der Zeitperiode in den historischen statistischen Daten ein Durchschnittswert der Anzahlen von mit einer RRC verbundenen Benutzern in der ersten Zelle in der Zeitperiode in der Vielzahl von Variationsperioden, die in dem eingestellten Dauerbereich enthalten sind, ist; oder
die Anzahl von mit einer RRC verbundenen Benutzern in der ersten Zelle in der Zeitperiode in den historischen statistischen Daten ein Wert ist, der erhalten wird, nachdem Datenfilterung an den Anzahlen von mit einer RRC verbundenen Benutzern in der ersten Zelle in der Zeitperiode in der Vielzahl von Variationsperioden, die in dem eingestellten Dauerbereich enthalten sind, durchgeführt wird, oder das Bestimmen, durch die Kommunikationsvorrichtung, einer Anzahl von mit einer RRC verbundenen Benutzern in der ersten Zelle in der Zeitperiode in den historischen statistischen Daten Folgendes umfasst:
Bestimmen, durch die Kommunikationsvorrichtung, der Anzahl von mit einer RRC verbundenen Benutzern in der ersten Zelle in der Zeitperiode in den historischen statistischen Daten basierend auf einer kumulativen Verteilungskurve der Anzahlen von mit einer RRC verbundenen Benutzern in der ersten Zelle in der Zeitperiode in der Vielzahl von Variationsperioden, die in dem eingestellten Dauerbereich enthalten sind.

8. Kommunikationsvorrichtung, wobei die Vorrichtung Folgendes umfasst:
ein Sender/Empfänger-Modul (810), konfiguriert zum Erhalten einer Anzahl von mit einer Funkbetriebsmittelsteuerung bzw. RRC verbundenen Benutzern in mindestens einer benachbarten Zelle einer ersten Zelle in einer ersten Zeitperiode, und
ein Verarbeitungsmodul (820), konfiguriert zum Vorhersagen einer Anzahl von mit einer RRC verbundenen Benutzern in der ersten Zelle in einer zweiten Zeitperiode basierend auf der Anzahl von mit einer RRC verbundenen Benutzern in der mindestens einen benachbarten Zelle der ersten Zelle in der ersten Zeitperiode, wobei
das Verarbeitungsmodul (820) ferner konfiguriert ist zum Konfigurieren, basierend auf der vorhergesagten Anzahl von mit einer RRC verbundenen Benutzern in der ersten Zelle in der zweiten Zeitperiode, einer SRS-Periode für ein Endgerät, das auf die erste Zelle in der zweiten Zeitperiode zugreift.

9. Vorrichtung nach Anspruch 8, wobei eine Anzahl von mit einer Funkbetriebsmittelsteuerung bzw. RRC verbundenen Benutzern in jeder benachbarten Zelle der mindestens einen benachbarten Zelle in der ersten Zeitperiode eine Anzahl von mit einer RRC verbundenen Benutzern in der benachbarten Zelle zu jedem Zeitpunkt der ersten Zeitperiode umfasst; und
die vorhergesagte Anzahl von mit einer RRC verbundenen Benutzern in der ersten Zelle in der zweiten Zeitperiode eine Summe von Anzahlen von mit einer RRC verbundenen Benutzern in der mindestens einen benachbarten Zelle zu einem ersten Zeitpunkt der ersten Zeitperiode ist und die Summe der Anzahlen von mit einer RRC verbundenen Benutzern in der mindestens einen benachbarten Zelle zu dem ersten Zeitpunkt größer als eine oder gleich einer Summe von Anzahlen von mit einer RRC verbundenen Benutzern in der mindestens einen benachbarten Zelle zu einem anderen Zeitpunkt der ersten Zeitperiode ist.

10. Vorrichtung nach Anspruch 8 oder 9, wobei das Verarbeitungsmodul spezifisch konfiguriert ist zum:
Konfigurieren, basierend auf der vorhergesagten Anzahl von mit einer RRC verbundenen Benutzern in der ersten Zelle in der zweiten Zeitperiode und einer Abbildungsbeziehung zwischen der Anzahl von mit einer RRC verbundenen Benutzern und der SRS-Periode, der SRS-Periode für das Endgerät, das auf die erste Zelle in der zweiten Zeitperiode zugreift.

11. Vorrichtung nach einem der Ansprüche 8 bis 10, wobei das Verarbeitungsmodul ferner konfiguriert ist zum Zählen einer Anzahl von mit einer RRC verbundenen Benutzern in der ersten Zelle in Echtzeit; und
das Sender/Empfänger-Modul ferner konfiguriert ist zum periodischen Senden der gezählten Anzahl von mit einer RRC verbundenen Benutzern in der ersten Zelle an die mindestens eine benachbarte Zelle, wobei die in Echtzeit gezählte Anzahl von mit einer RRC verbundenen Benutzern in der ersten Zelle verwendet wird, um eine SRS-Periode für die benachbarte Zelle zu konfigurieren.

12. Kommunikationsvorrichtung, wobei die Vorrichtung Folgendes umfasst:
ein Sender/Empfänger-Modul (810), konfiguriert zum Erhalten von historischen statistischen Daten einer Anzahl von mit einer Funkbetriebsmittelsteuerung bzw. RRC verbundenen Benutzern in einer ersten Zelle in einer Variationsperiode, wobei die Variationsperiode eine Vielzahl von Zeitperioden umfasst und die historischen statistischen Daten eine Anzahl von mit einer RRC verbundenen Benutzern in der ersten Zelle in jeder Zeitperiode der Variationsperiode umfassen; und
ein Verarbeitungsmodul (820), konfiguriert zum Vorhersagen einer Anzahl von mit einer RRC verbundenen Benutzern in der ersten Zelle in einer dritten Zeitperiode basierend auf einer Anzahl von mit einer RRC verbundenen Benutzern in der ersten Zelle in einer Zeitperiode, die an einem selben Ort wie die dritte Zeitperiode in der Variationsperiode ist,
wobei
das Verarbeitungsmodul (820) ferner konfiguriert ist zum Konfigurieren, basierend auf der vorhergesagten Anzahl von mit einer RRC verbundenen Benutzern in der ersten Zelle in der dritten Zeitperiode, einer SRS-Periode für ein Endgerät, das auf die erste Zelle in der dritten Zeitperiode zugreift.

13. Vorrichtung nach Anspruch 12, wobei das Sender/Empfänger-Modul spezifisch konfiguriert ist zum:
Erhalten einer Anzahl von mit einer RRC verbundenen Benutzern in der ersten Zelle in einem früher eingestellten Dauerbereich,
Bestimmen der Variationsperiode basierend auf der Anzahl von mit einer RRC verbundenen Benutzern in der ersten Zelle in dem früher eingestellten Dauerbereich, wobei der eingestellte Dauerbereich eine Vielzahl von Variationsperioden umfasst; und
für jede Zeitperiode in der Variationsperiode Bestimmen einer Anzahl von mit einer RRC verbundenen Benutzern in der ersten Zelle in der Zeitperiode in den historischen statistischen Daten basierend auf Anzahlen von mit einer RRC verbundenen Benutzern in der ersten Zelle in der Zeitperiode in der Vielzahl von Variationsperioden, die in dem eingestellten Dauerbereich enthalten sind.

14. Vorrichtung nach Anspruch 13, wobei die Anzahl von mit einer RRC verbundenen Benutzern in der ersten Zelle in der Zeitperiode in den historischen statistischen Daten ein Durchschnittswert der Anzahlen von mit einer RRC verbundenen Benutzern in der ersten Zelle in der Zeitperiode in der Vielzahl von Variationsperioden, die in dem eingestellten Dauerbereich enthalten sind, ist; oder
die Anzahl von mit einer RRC verbundenen Benutzern in der ersten Zelle in der Zeitperiode in den historischen statistischen Daten ein Wert ist, der erhalten wird, nachdem Datenfilterung an den Anzahlen von mit einer RRC verbundenen Benutzern in der ersten Zelle in der Zeitperiode in der Vielzahl von Variationsperioden, die in dem eingestellten Dauerbereich enthalten sind, durchgeführt wird, oder das Verarbeitungsmodul ferner konfiguriert ist zum:
Bestimmen der Anzahl von mit einer RRC verbundenen Benutzern in der ersten Zelle in der Zeitperiode in den historischen statistischen Daten basierend auf einer kumulativen Verteilungskurve der Anzahlen von mit einer RRC verbundenen Benutzern in der ersten Zelle in der Zeitperiode in der Vielzahl von Variationsperioden, die in dem eingestellten Dauerbereich enthalten sind.

## Revendications

1. Procédé de configuration d'une période de signal de référence sonore, SRS, dans lequel le procédé comprend :
l'obtention (S201), par un appareil de communication, d'une quantité d'utilisateurs connectés au contrôle de ressources radio, RRC, dans au moins une cellule voisine d'une première cellule à l'intérieur d'une première période de temps ;
la prédiction (S202), par l'appareil de communication, d'une quantité d'utilisateurs connectés au RRC dans la première cellule à l'intérieur d'une deuxième période de temps sur la base de la quantité d'utilisateurs connectés au RRC dans l'au moins une cellule voisine de la première cellule à l'intérieur de la première période de temps ; et
la configuration (S203), par l'appareil de communication sur la base de la quantité prédite d'utilisateurs connectés au RRC dans la première cellule à l'intérieur de la deuxième période de temps, d'une période SRS pour un dispositif terminal qui accède à la première cellule à l'intérieur de la deuxième période de temps.

2. Procédé selon la revendication 1, dans lequel une quantité d'utilisateurs connectés au contrôle de ressources radio RRC dans chaque cellule voisine de l'au moins une cellule voisine à l'intérieur de la première période de temps comprend une quantité d'utilisateurs connectés au RRC dans la cellule voisine à des moments différents de la première période de temps ; et
la quantité prédite d'utilisateurs connectés au RRC dans la première cellule à l'intérieur de la deuxième période de temps est une somme de quantités d'utilisateurs connectés au RRC dans l'au moins une cellule voisine à un premier moment de la première période de temps, et la somme des quantités d'utilisateurs connectés au RRC dans l'au moins une cellule voisine au premier moment est supérieure ou égale à une somme de quantités d'utilisateurs connectés au RRC dans l'au moins une cellule voisine à un autre moment de la première période de temps.

3. Procédé selon la revendication 1 ou 2, dans lequel la configuration, par l'appareil de communication, d'une période SRS pour un dispositif terminal qui accède à la première cellule à l'intérieur de la deuxième période de temps comprend :
la configuration, par l'appareil de communication sur la base de la quantité prédite d'utilisateurs connectés au RRC dans la première cellule à l'intérieur de la deuxième période de temps et une relation de mise en correspondance entre la quantité d'utilisateurs connectés au RRC et la période SRS, de la période SRS pour le dispositif terminal qui accède à la première cellule à l'intérieur de la deuxième période de temps.

4. Procédé selon l'une quelconque des revendications 1 à 3, dans lequel le procédé comprend en outre :
le comptage, par l'appareil de communication, d'une quantité d'utilisateurs connectés au RRC dans la première cellule en temps réel ; et
l'envoi de manière périodique, par l'appareil de communication, de la quantité comptée d'utilisateurs connectés au RRC dans la première cellule à l'au moins une cellule voisine, dans lequel la quantité d'utilisateurs connectés au RRC dans la première cellule comptée en temps réel est utilisée pour configurer une période SRS pour la cellule voisine.

5. Procédé de configuration d'une période de signal de référence sonore, SRS, dans lequel le procédé comprend :
l'obtention (S601), par un appareil de communication, de données statistiques historiques d'une quantité d'utilisateurs connectés au contrôle de ressources radio, RRC, dans une première cellule à l'intérieur d'une période de variation, dans lequel la période de variation comprend une pluralité de périodes de temps, et les données statistiques historiques comprennent une quantité d'utilisateurs connectés au RRC dans la première cellule dans chaque période de temps de la période de variation ;
la prédiction (S602), par l'appareil de communication, d'une quantité d'utilisateurs connectés au RRC dans la première cellule à l'intérieur d'une troisième période de temps sur la base d'une quantité d'utilisateurs connectés au RRC dans la première cellule dans une période de temps qui se trouve à une même localisation que la troisième période de temps dans la période de variation ; et
la configuration (S603), par l'appareil de communication sur la base de la quantité prédite d'utilisateurs connectés au RRC dans la première cellule à l'intérieur de la troisième période de temps, d'une période SRS pour un dispositif terminal qui accède à la première cellule à l'intérieur de la troisième période de temps.

6. Procédé selon la revendication 5, dans lequel l'obtention, par un appareil de communication, de données statistiques historiques d'une quantité d'utilisateurs connectés au RRC dans une première cellule à l'intérieur d'une période de variation comprend :
l'obtention, par l'appareil de communication, d'une quantité d'utilisateurs connectés au RRC dans la première cellule à l'intérieur d'une plage de durée définie passée ;
la détermination, par l'appareil de communication, de la période de variation sur la base de la quantité d'utilisateurs connectés au RRC dans la première cellule à l'intérieur de la plage de durée définie passée, dans lequel la plage de durée définie comprend une pluralité de périodes de variation ; et
pour chaque période de temps dans la période de variation, la détermination, par l'appareil de communication, d'une quantité d'utilisateurs connectés au RRC dans la première cellule dans la période de temps dans les données statistiques historiques sur la base de quantités d'utilisateurs connectés au RRC dans la première cellule dans la période de temps dans la pluralité de périodes de variation comprises à l'intérieur de la plage de durée définie.

7. Procédé selon la revendication 6, dans lequel la quantité d'utilisateurs connectés au RRC dans la première cellule dans la période de temps dans les données statistiques historiques est une valeur moyenne de quantités d'utilisateurs connectés au RRC dans la première cellule dans la période de temps dans la pluralité de périodes de variation comprises à l'intérieur de la plage de durée définie ; ou
la quantité d'utilisateurs connectés au RRC dans la première cellule dans la période de temps dans les données statistiques historiques est une valeur obtenue après qu'un filtrage de données est exécuté sur les quantités d'utilisateurs connectés au RRC dans la première cellule dans la période de temps dans la pluralité de périodes de variation comprises à l'intérieur de la plage de durée définie ; ou la détermination, par l'appareil de communication, d'une quantité d'utilisateurs connectés au RRC dans la première cellule dans la période de temps dans les données statistiques historiques comprend :
la détermination, par l'appareil de communication, de la quantité d'utilisateurs connectés au RRC dans la première cellule dans la période de temps dans les données statistiques historiques sur la base d'une courbe de distribution cumulative des quantités d'utilisateurs connectés au RRC dans la première cellule dans la période de temps dans la pluralité de périodes de variation comprises à l'intérieur de la plage de durée définie.

8. Appareil de communication, dans lequel l'appareil comprend :
un module d'émetteur-récepteur (810), configuré pour obtenir une quantité d'utilisateurs connectés au contrôle de ressources radio, RRC, dans au moins une cellule voisine d'une première cellule à l'intérieur d'une première période de temps ; et
un module de traitement (820), configuré pour prédire une quantité d'utilisateurs connectés au RRC dans la première cellule à l'intérieur d'une deuxième période de temps sur la base de la quantité d'utilisateurs connectés au RRC dans l'au moins une cellule voisine de la première cellule à l'intérieur de la première période de temps, dans lequel
le module de traitement (820) est configuré en outre pour configurer, sur la base de la quantité prédite d'utilisateurs connectés au RRC dans la première cellule à l'intérieur de la deuxième période de temps, une période SRS pour un dispositif terminal qui accède à la première cellule à l'intérieur de la deuxième période de temps.

9. Appareil selon la revendication 8, dans lequel une quantité d'utilisateurs connectés au contrôle de ressources radio RRC dans chaque cellule voisine de l'au moins une cellule voisine à l'intérieur de la première période de temps comprend une quantité d'utilisateurs connectés au RRC dans la cellule voisine à chaque moment de la première période de temps ; et
la quantité prédite d'utilisateurs connectés au RRC dans la première cellule à l'intérieur de la deuxième période de temps est une somme de quantités d'utilisateurs connectés au RRC dans l'au moins une cellule voisine à un premier moment de la première période de temps, et la somme des quantités d'utilisateurs connectés au RRC dans l'au moins une cellule voisine au premier moment est supérieure ou égale à une somme de quantités d'utilisateurs connectés au RRC dans l'au moins une cellule voisine à un autre moment de la première période de temps.

10. Appareil selon la revendication 8 ou 9, dans lequel le module de traitement est configuré spécifiquement pour :
configurer, sur la base de la quantité prédite d'utilisateurs connectés au RRC dans la première cellule à l'intérieur de la deuxième période de temps et d'une relation de mise en correspondance entre la quantité d'utilisateurs connectés au RRC et la période SRS, la période SRS pour le dispositif terminal qui accède à la première cellule à l'intérieur de la deuxième période de temps.

11. Appareil selon l'une quelconque des revendications 8 à 10, dans lequel le module de traitement est configuré en outre pour compter une quantité d'utilisateurs connectés au RRC dans la première cellule en temps réel ; et
le module d'émetteur-récepteur est configuré en outre pour envoyer périodiquement la quantité comptée d'utilisateurs connectés au RRC dans la première cellule à l'au moins une cellule voisine, dans lequel la quantité d'utilisateurs connectés au RRC dans la première cellule comptée en temps réel est utilisée pour configurer une période SRS pour la cellule voisine.

12. Appareil de communication, dans lequel l'appareil comprend :
un module d'émetteur-récepteur (810), configuré pour obtenir des données statistiques historiques d'une quantité d'utilisateurs connectés au contrôle de ressources radio, RRC, dans une première cellule à l'intérieur d'une période de variation, dans lequel la période de variation comprend une pluralité de périodes de temps, et les données statistiques historiques comprennent une quantité d'utilisateurs connectés au RRC dans la première cellule dans chaque période de temps de la période de variation ; et
un module de traitement (820), configuré pour prédire une quantité d'utilisateurs connectés au RRC dans la première cellule à l'intérieur d'une troisième période de temps sur la base d'une quantité d'utilisateurs connectés au RRC dans la première cellule dans une période de temps qui est à une même localisation que la troisième période de temps dans la période de variation, dans lequel
le module de traitement (820) est configuré en outre pour configurer, sur la base de la quantité prédite d'utilisateurs connectés au RRC dans la première cellule à l'intérieur de la troisième période de temps, une période SRS pour un dispositif terminal qui accède à la première cellule à l'intérieur de la troisième période de temps.

13. Appareil selon la revendication 12, dans lequel le module d'émetteur-récepteur est configuré spécifiquement pour :
obtenir une quantité d'utilisateurs connectés au RRC dans la première cellule à l'intérieur d'une plage de durée définie passée ;
déterminer la période de variation sur la base de la quantité d'utilisateurs connectés au RRC dans la première cellule à l'intérieur de la plage de durée définie passée, dans lequel la plage de durée définie comprend une pluralité de périodes de variation ; et
pour chaque période de temps dans la période de variation, déterminer une quantité d'utilisateurs connectés au RRC dans la première cellule dans la période de temps dans les données statistiques historiques sur la base des quantités d'utilisateurs connectés au RRC dans la première cellule dans la période de temps dans la pluralité de périodes de variation comprises à l'intérieur de la plage de durée définie.

14. Appareil selon la revendication 13, dans lequel la quantité d'utilisateurs connectés au RRC dans la première cellule dans la période de temps dans les données statistiques historiques est une valeur moyenne des quantités d'utilisateurs connectés au RRC dans la première cellule dans la période de temps dans la pluralité de périodes de variation comprises à l'intérieur de la plage de durée définie ; ou
la quantité d'utilisateurs connectés au RRC dans la première cellule dans la période de temps dans les données statistiques historiques est une valeur obtenue après qu'un filtrage de données est exécuté sur les quantités d'utilisateurs connectés au RRC dans la première cellule dans la période de temps dans la pluralité de périodes de variation comprises à l'intérieur de la plage de durée définie ; ou le module de traitement est configuré en outre pour :
déterminer la quantité d'utilisateurs connectés au RRC dans la première cellule dans la période de temps dans les données statistiques historiques sur la base d'une courbe de distribution cumulative des quantités d'utilisateurs connectés au RRC dans la première cellule dans la période de temps dans la pluralité de périodes de variation comprises à l'intérieur de la plage de durée définie.
